# EUROPÄISCHE PATENTSCHRIFT

(11) **EP 2 108 536 B1**
(45) Veröffentlichungstag und Bekanntmachung des Hinweises auf die Patenterteilung: **13.10.2010**
(21) Anmeldenummer: 09004902.4
(22) Anmeldetag: 02.04.2009
(51) Int. Cl.: B60J 7/043

(54) **Fahrzeugdach mit einem verstellbaren Deckel und einer Deckelantriebseinrichtung**
Vehicle roof with an adjustable cover and a cover drive device
Toit de véhicule doté d'un capot réglable et d'un dispositif d'entraînement de capot

(30) Priorität: 03.04.2008 DE 102008017489; 03.06.2008 DE 202008007383 U
(43) Veröffentlichungstag der Anmeldung: 14.10.2009
(73) Patentinhaber: Webasto AG, 82131 Stockdorf (DE)
(72) Erfinder: Färber, Manfred, 82407 Wielenbach (DE); Wingen, Bernhard, 83620 Feldkirchen (DE); Pollak, Martin, 82178 Puchheim (DE)
(74) Vertreter: Wiese Konnerth Fischer Patentanwälte Partnerschaft

(56) Entgegenhaltungen:
- EP-A- 1 500 539
- WO-A-2008/049408
- DE-A1- 10 011 747
- DE-A1-102005 059 286
- DE-B3-102006 045 632

## Beschreibung

Die Erfindung betrifft ein Fahrzeugdach mit den Merkmalen des Oberbegriffs des Anspruchs 1.

Aus der EP 1 500 539 A1 ist ein gattungsgemäßes Fahrzeugdach bekannt geworden, bei dem ein Steuerschlitten eine Anlagerolle und einen Führungsabschnitt für eine Kulissenbahn eines Deckelträgers aufweist und über diese Anlagerolle und den Führungsabschnitt sowohl bei geschlossenem wie auch bei ausgestelltem Deckel ständig in Führungskontakt mit der Kulissenbahn des Deckelträgers ist.

Aus der WO 2008/049408 A1 ist ein Fahrzeugdach bekannt geworden, bei dem in einer Kulissenbahn einer vorderen Deckelkulisse ein Steuerteil eines Antriebsschlittens aufgenommen ist. Der ausgeschwenkte Deckel wird von diesem Steuerteil nach hinten in seine Offenstellung mitgenommen, während das Steuerteil in einem unteren Endabschnitt der Kulissenbahn aufgenommen ist. Die Bauhöhe des Deckels mit der darunter angeordneten Kulissenbahn ist vergleichsweise groß.

Die DE 10 2006 045 632 B3 offenbart einen Deckel eines öffnungsfähigen Fahrzeugdaches mit einer Ausstellmechanik, die den Deckel aus einer mit seinem Hinterrand angehobenen Lüftungsstellung über eine hintere feste Dachhaut verschiebt. Das Anheben erfolgt mittels eines Ausstellhebels, der über einen Drehzapfen in eine an einem Deckelträger in Längsrichtung verlaufende Deckelkulisse eingreift und dessen Drehzapfen den sich nach hinten bewegenden Deckel an der Deckelkulisse abstützt.

Der Erfindung liegt die Aufgabe zugrunde, ein eingangs genanntes Fahrzeugdach im Hinblick auf die Antriebseinrichtung des Deckels und deren Bauraum zu verbessern und insbesondere die Bauhöhe der Einheit aus Deckel und darunter angeordnetem Kulissenelement zu reduzieren.

Die Aufgabe wird bei dem eingangs genannten Fahrzeugdach erfindungsgemäß dadurch gelöst, dass das Steuerteil aus der Kulissenbahn ausgetreten ist, wenn der Deckel in seine Offenstellung nach hinten verschoben wird.

Vorteilhafte Ausgestaltungen der Erfindung sind in den abhängigen Ansprüchen angegeben.

Der Koppelhebel übernimmt somit die Aufgabe des Steuerteils bei ausgestelltem Deckel und bildet anstatt des Steuerteils das Bewegungsübertragungsmittel zum Übertragen der Antriebs-Verschiebebewegung von dem Antriebsschlitten auf den Deckel bzw. einen Deckelträger oder ein als Deckelträger dienendes Kulissenelement. Da das Steuerteil nicht für die Übertragung der Längsantriebsbewegung bei angehobenem und ausgestelltem Deckel zuständig ist, ist die Kulissenbahn nur für das anfängliche Ausschwenken des Deckels erforderlich und ein abwärts gerichteter Endabschnitt der Kulissenbahn kann gekürzt gebildet werden. Damit reduziert sich die Bauhöhe der Einheit aus Deckel und darunter angeordnetem Kulissenelement.

Vorzugsweise ist in einer Übergangsstellung das Steuerteil noch an der Kulissenbahn geführt gehalten und der Koppelhebel ist schon im Eingriff an dem Antriebsschlitten. Damit ist eine sichere Bewegungsübertragung auch in der Übergangsstellung gewährleistet.

Wenn der Deckel in seine Offenstellung nach hinten verschoben wird, ist somit das Steuerteil aus der Kulissenbahn ausgetreten und der Koppelhebel übernimmt alleine die Bewegungsübertragung.

Zweckmäßigerweise ist der Koppelhebel an seinem Vorderende oder im Bereich seines Vorderendes um eine Schwenkachse an dem Kulissenelement gelagert, jedoch sind auch andere Lagerungen verwendbar.

Eine einfache und funktionssichere Gestaltung sieht vor, dass der Koppelhebel vom Antriebsschlitten zwischen seiner Ruhestellung und seiner Funktionsstellung verstellt wird. Der Koppelhebel kann auch zusätzlich oder ersatzweise durch Federkraft zumindest in eine Richtung betätigt werden.

Zweckmäßigerweise enthält der Koppelhebel einen Steg, der von einem Stift des Antriebsschlittens geführt oder hintergriffen ist und der ein Steuerteil darstellt.

Wenn ein Hinterende des in seine Funktions- oder Koppelstellung verschwenkten Koppelhebels in einem Rasteingriff an dem Antriebsschlitten ist, ist eine starre Koppelung des Antriebsschlittens über den Koppelhebel mit dem vorderen Kulissenelement und damit mit dem Deckel hergestellt.

Bevorzugt weist der Koppelhebel an seinem Hinterende ein Gleitelement auf, das in der Funktions- oder Koppelstellung an einer Führungsbahn geführt ist. Die Führungsbahn ist beispielsweise an einer dachfesten Längsführungsschiene angeordnet oder gebildet.

Zweckmäßigerweise ist das Gleitelement in der Führungsbahn gegen vertikale Hubbewegung gesichert und es hält den Koppelhebel in der Raststellung am Antriebsschlitten.

Des weiteren kann ein hinteres Kulissenelement eines hinteren Ausstellhebels für den Deckel mit dem vorderen Kulissenelement über einen Verbindungsabschnitt verbunden sein. Damit ist ein modularer Aufbau geschaffen, da das hintere Kulissenelement an eine jeweilige Form oder Krümmung eines Deckels angepasst sein kann, während das vordere Kulissenelement ein universell verwendbares Standardbauteil sein kann.

In bevorzugter Gestaltung ist das hintere Kulissenelement ein Rollprofil, das einen Gleiter des Ausstellhebels führend umgreift, und das Rollprofil weist einen Längsschlitz auf, durch den eine Achse des Gleiters greift.

Dabei ist es für eine kompakte Bauweise besonders zweckmäßig, wenn das Rollprofil angrenzend an den Längsschlitz eine obere Umbiegung und eine untere Umbiegung aufweist, wobei die untere Umbiegung näher an einer gegenüberliegenden Wand des Rollprofils angeordnet ist als die obere Umbiegung. Damit kann der Ausstellhebel platzsparend an der unteren Umbiegung außenseitig vorbeigeführt werden.

Nachfolgend wird die Erfindung anhand eines Ausführungsbeispiels des Fahrzeugdaches unter Bezugnahme auf die Zeichnung näher erläutert. Es zeigt:
- Fig. 1: in einer Seitenansicht in schematischer Darstellung ein öffnungsfä- higes Fahrzeugdach mit einem Deckel, der in einer Dachöffnung mit angehobenem Hinterrand in einer Lüftungsstellung angeordnet ist;
- Fig. 2: in einer Seitenansicht gemäß Fig. 1 das Fahrzeugdach mit dem in eine Öffnungsstellung über dem Fahrzeugdach nach hinten ver- schobenen Deckel;
- Fig. 3: in einer perspektivischen Draufsicht das Fahrzeugdach in einer Öff- nungsstellung gemäß Fg. 2;
- Fig. 4: in einer perspektivischen Draufsicht eine vordere Antriebsmechanik mit einem Koppelhebel zwischen einem einen Deckelträger bilden- den vorderen Kulissenelement und einem Antriebsschlitten;
- Fig. 5: in einer weiteren perspektivischen Draufsicht das vordere Kulissen- element und ein hinteres Kulissenelement mit der Antriebsmechanik auf der Dachöffnungsseite;
- Fig. 6: in einer weiteren perspektivischen Draufsicht das vordere und das hinteren Kulissenelement in einer Stellung gemäß Fig. 5 von der der Dachöffnungsseite gegenüberliegenden Seite;
- Fig. 7: in einer Seitenansicht die vordere Antriebsmechanik bei geschlos- senem Deckel;
- Fig. 8: in einer Seitenansicht die vordere Antriebsmechanik des in seine Lüftungsstellung verschwenkten Deckels;
- Fig. 9: in einer Seitenansicht die vordere Antriebsmechanik des in einer Übergangsstellung angeordneten Deckels;
- Fig. 10: in einer Seitenansicht die vordere Antriebsmechanik des in seiner Offenstellung angeordneten Deckels;

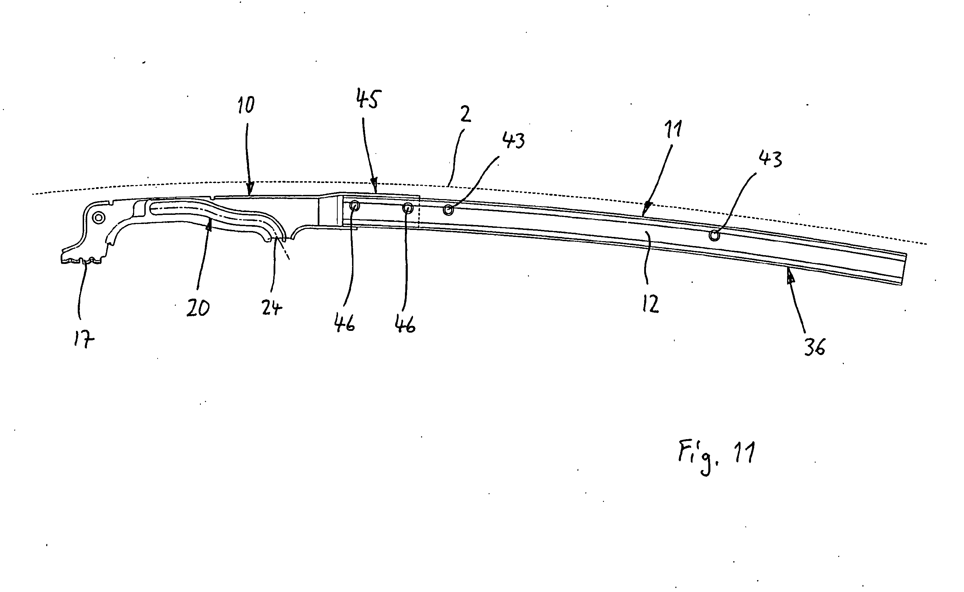

- Fig. 11: in einer Seitenansicht die das vordere und das hintere Kulissenele- ment enthaltende Kulisseneinrichtung;
- Fig. 12: in einer Querschnittansicht eine Verbindungsstelle des vordere und des hintere Kulissenelements; und
- Fig. 13: in einer Querschnittansicht ein die Kulissenbahn des hinteren Kulis- senelements bildendes Rollprofil.

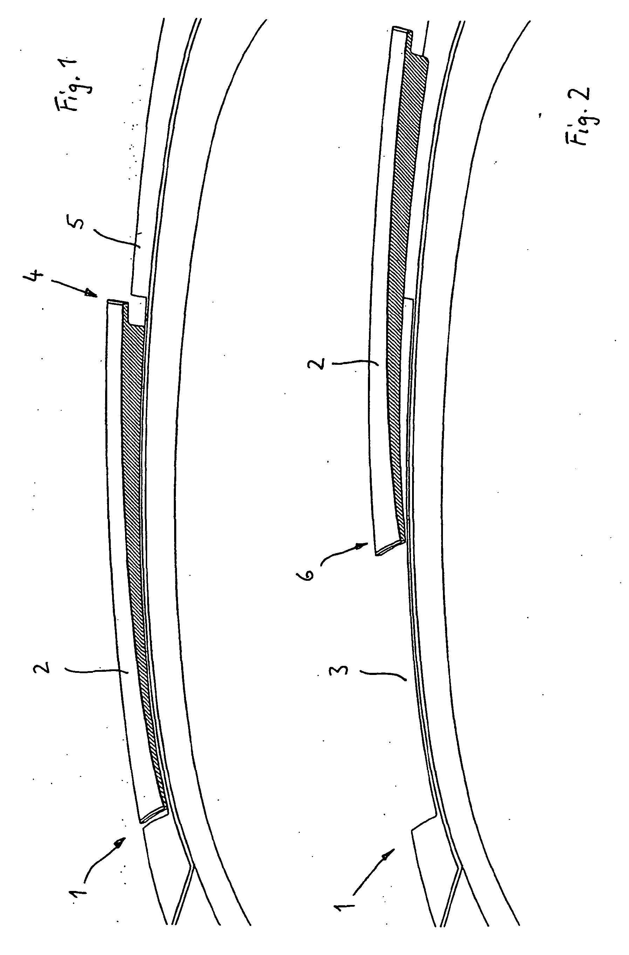

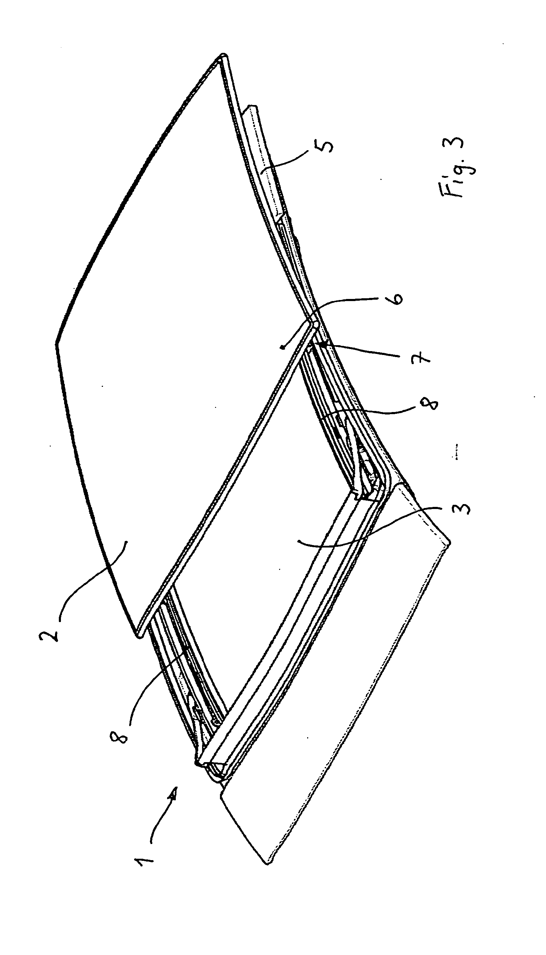

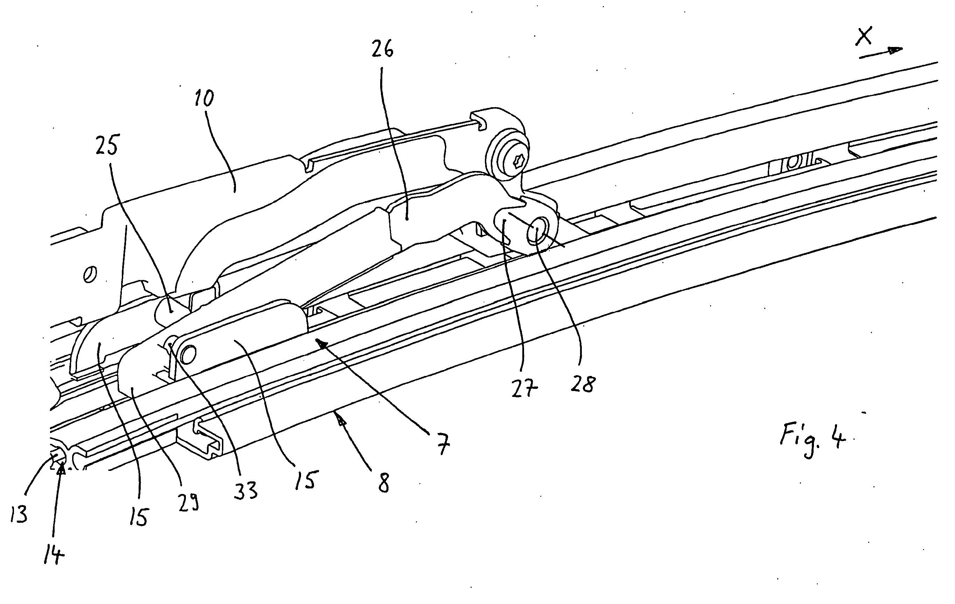

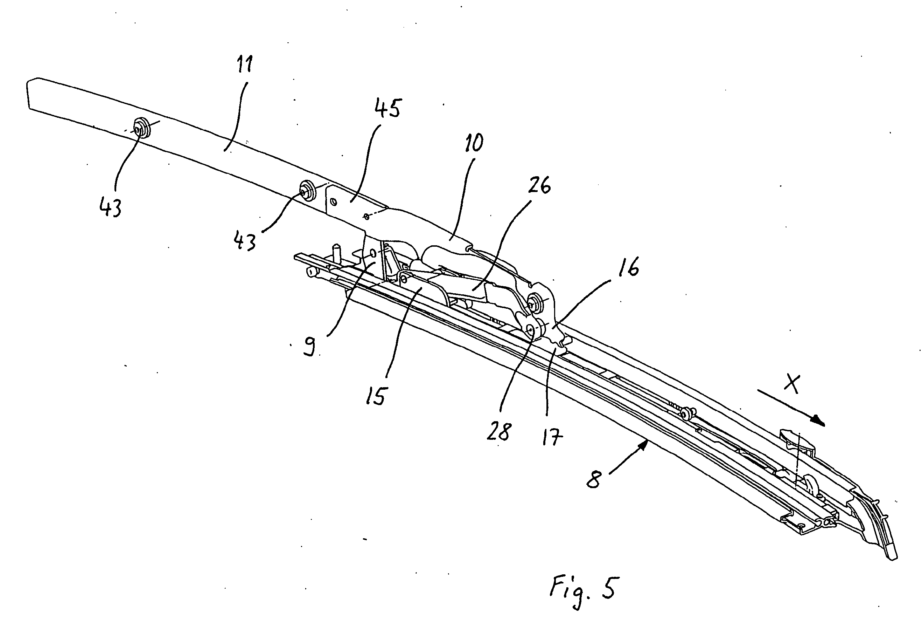

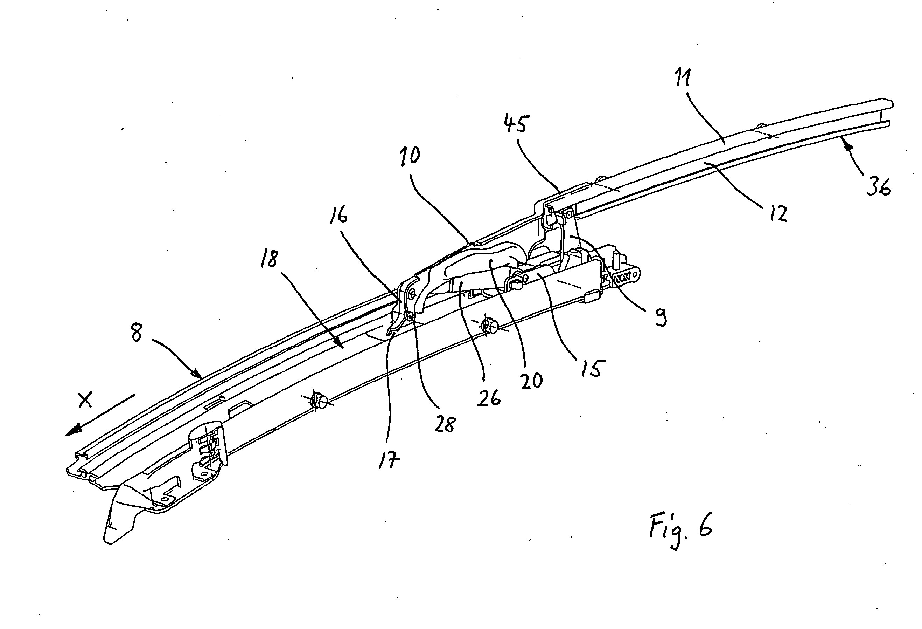

Ein öffnungsfähiges Fahrzeugdach 1 weist einen Deckel 2 auf, der aus einer Schließstellung in einer Dachöffnung 3 in eine Lüftungsstellung (siehe Fig. 1) verstellbar ist, in der sein Hinterrand 4 über eine sich hinter der Dachöffnung 3 anschließende Dachhaut 5 angehoben ist. Das Öffnen des Daches 1 erfolgt, indem der Deckel 2 aus der Lüftungsstellung z. B. noch weiter angehoben wird und nach hinten über die Dachhaut 5, die grundsätzlich von einem festen Dach oder auch von einem bewegbaren Dachteil gebildet sein kann, in eine Spoilerstellung (siehe Fig. 2 und 3) verfahren wird. Der Deckel 2 ist beidseits der Dachöffnung 3 jeweils über eine unter seinem Vorderbereich 6 angeordnete Antriebsmechanik 7 (siehe z. B. Fig. 4 bis 6, der Pfeil X weist am Fahrzeugdach nach vorne in Fahrtrichtung) entlang einer seitlichen Längsführung wie z. B. einer Führungsschiene 8 bewegbar und über einen hinteren Ausstellhebel 9 (siehe Fig. 5 und 6) in seine Spoilerstellung ausschwenkbar. Unterhalb des Deckels 2 ist beidseits jeweils eine Kulisseneinrichtung angeordnet, die eine vordere Deckelkulisse oder ein vorderes Kulissenelement 10 und eine damit verbundene hintere Deckelkulisse bzw. ein hinteres Kulissenelement 11 aufweist. Der Ausstellhebel 9 gleitet beim rückwärtigen Verschieben des Deckels 2 in einer Kulissenbahn 12 des hinteren Kulissenelements 11. Ein solches Spoilerdach mit einem rückwärtigen Ausstellhebel ist grundsätzlich z. B. in der DE 10 2006 045 632 B3 beschrieben.

Von einem am Fahrzeugdach 1 hinter der Dachöffnung 3 angeordneten Antriebsmotor (nicht dargestellt) verläuft jeweils ein Antriebskabel 13 (siehe Fig. 4) zu der zugeordneten der beiden seitlichen Führungsschienen 8, an der es in einem Kabelkanal 14 bis zu einem Antriebsschlitten 15 geführt ist, mit dem es fest verbunden ist. Der an der Führungsschiene 8 längs verschiebbar geführte Antriebsschlitten 15 ist ein Bauteil der vorderen Antriebsmechanik 7 des Deckels 2.

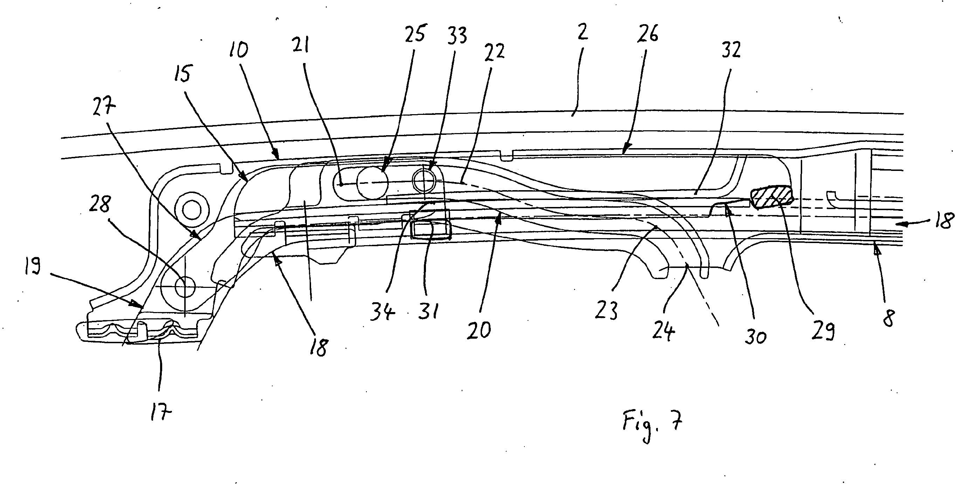

Das einen Deckelträger darstellende vordere Kulissenelement 10 ist an der Unterseite des Deckels 2 in seinem Vorderabschnitt fest angebracht und erstreckt sich vom Deckel 2 senkrecht abwärts. An seinem vom Deckel 2 nach unten abstehenden Vorderende 16 enthält das vordere Kulissenelement 10 einen Gleiter 17 (siehe z. B. Fig. 5 und 6), der in einer Führungsbahn 18 der Führungsschiene 8 verschiebbar geführt ist und in Schließstellung des Deckels 2 in einem nach vorne hin abfallenden Vorderabschnitt 19 der Führungsbahn 18 (siehe z. B. Fig. 7) aufgenommen ist.

Das vordere Kulissenelement 10 weist eine Führungskulisse oder Kulissenbahn 20 auf, die von ihrem vorderen Ende 21, das nahe am Deckel 2 angeordnet ist, nach hinten verläuft und in einem ersten Abschnitt 22 im wesentlichen parallel zum Deckel 2 und anschließend zumindest abschnittsweise leicht abwärts verläuft und in einem zweiten Abschnitt oder Endabschnitt 23 schräg nach unten gekrümmt verläuft, bis sie in einer Austrittsöffnung 24 endet, durch die ein in der Kulissenbahn 20 geführter Steuerbolzen 25 ein- und austreten kann. Der Steuerbolzen 25 ist an dem Antriebsschlitten 15 angeordnet und steht seitlich zum Gleiteingriff an der Kulissenbahn 20 hervor.

Ein Koppelhebel 26 weist ein abwärts gekröpftes Vorderende 27 auf, an dem er an dem vorderen Kulissenelement 10 in einer Drehachse 28 schwenkbar angelenkt ist, die z. B. nahe oberhalb des Gleiters 17 angeordnet ist. Der Koppelhebel 26 weist an seinem Hinterende ein Gleitelement 29 auf, das an der Führungsschiene 8 in der Führungsbahn 18 oder einer anderen Führungsbahn geführt ist, wenn der Koppelhebel 26 mit seinem Hinterende herabgeschwenkt ist und mit einer Ausnehmung 30 an einem Rastabschnitt 31 des Antriebsschlittens 15 in Längsrichtung relativ zum Antriebsschlitten 15 festgelegt ist, so dass er gemeinsam mit dem Antriebsschlitten 15 entlang der Führungsbahn 18 verschiebbar verbunden ist.

Bei geschlossenem Fahrzeugdach 1 bzw. Deckel 2 (siehe Fig. 7) ist der Antriebsschlitten 15 in einer vorderen Stellung und sein Steuerbolzen 25 befindet sich nahe dem vorderen Ende 21 der Kulissenbahn 20. Das vordere Kulissenelement 10 ist abgesenkt und sein Gleiter 17 befindet sich im Vorderabschnitt 19 der Führungsbahn 18 in einer unteren Position. Der Koppelhebel 26 weist seitlich einen längs verlaufenden Steg 32 auf, der zwischen einem gegen den Steg 32 vorstehenden Stift 33 des Antriebsschlittens 15 und einer Auflage 34 des Antriebsschlittens 15 gehalten ist. In der Schließstellung des Deckels 2 ist der Koppelhebel 26 in einer oberen funktionslosen Ruhestellung gehalten.

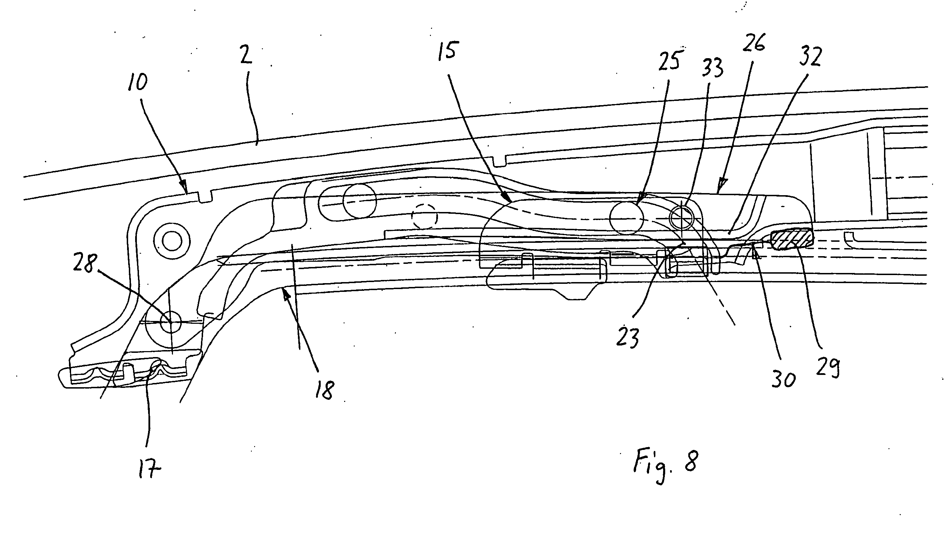

Zum Verstellen des Deckels 2 aus seiner Schließstellung in seine Lüftungsstellung zieht das Antriebskabel 13 den Antriebsschlitten 15 an der Führungsschiene 8 nach hinten. Während dieser Bewegung gleitet der Steuerbolzen 25 in der Kulissenbahn 20 nach hinten in die in Fig. 8 dargestellte Zwischenstellung, in der der Deckel 2 über das vordere Kulissenelement 10 in seine Lüftungsstellung angehoben und mit seinem Hinterrand 4 ausgeschwenkt ist. Der Stift 33 hat sich gegen das hintere Ende des Stegs 32 bewegt und führt den Koppelhebel 26 weiterhin am Antriebsschlitten 15.

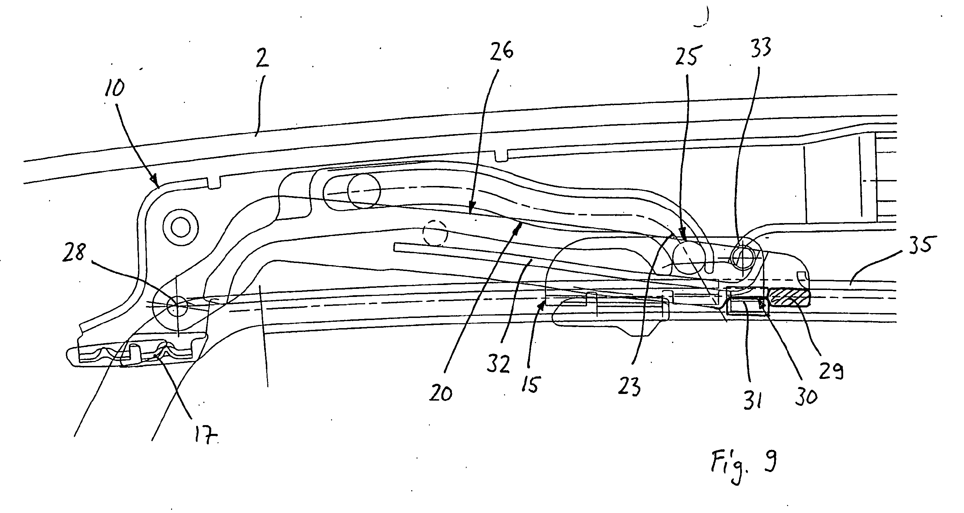

Bei der weiteren rückwärts gerichteten Bewegung des Antriebsschlittens 15 (von der Stellung der Fig. 8 in die Stellung der Fig. 9, die als Übergabestellung bezeichnet werden kann) gleitet der Steuerbolzen 25 im gebogenen Endabschnitt 23 der Kulissenbahn 20 abwärts bis vor die Austrittsöffnung 24. Dabei schwenkt der Steuerbolzen 25 das vordere Kulissenelement 10 um den Gleiter 17 nach oben und zieht gleichzeitig das vordere Kulissenelement 10 nach hinten, so dass der Gleiter 17 in dem Vorderabschnitt 19 der Führungsbahn 18 angehoben wird. Somit wird der Deckel 2 sowohl angehoben wie auch verschwenkt. Des weiteren ist der Koppelhebel 26, der an seinem Vorderende 27 von dem sich hebenden vorderen Kulissenelement 10 ebenfalls angehoben wird, durch die Führung des Stiftes 33 an seinem Hinterende abgesenkt worden und sein hinteres Gleitelement 29 wird unter einen Führungssteg 35 der Führungsbahn 18 eingeschoben, so dass eine vertikale Hubbewegung des Hinterendes des Koppelhebels 26 ausgeschlossen ist. Gleichzeitig wird die Ausnehmung 30 an dem Rastabschnitt 31 des Antriebsschlittens 15 festgelegt, so dass der Antriebsschlitten 15 über den Koppelhebel 26 mit dem vorderen Kulissenelement 10 und damit mit dem Deckel 2 starr gekoppelt ist.

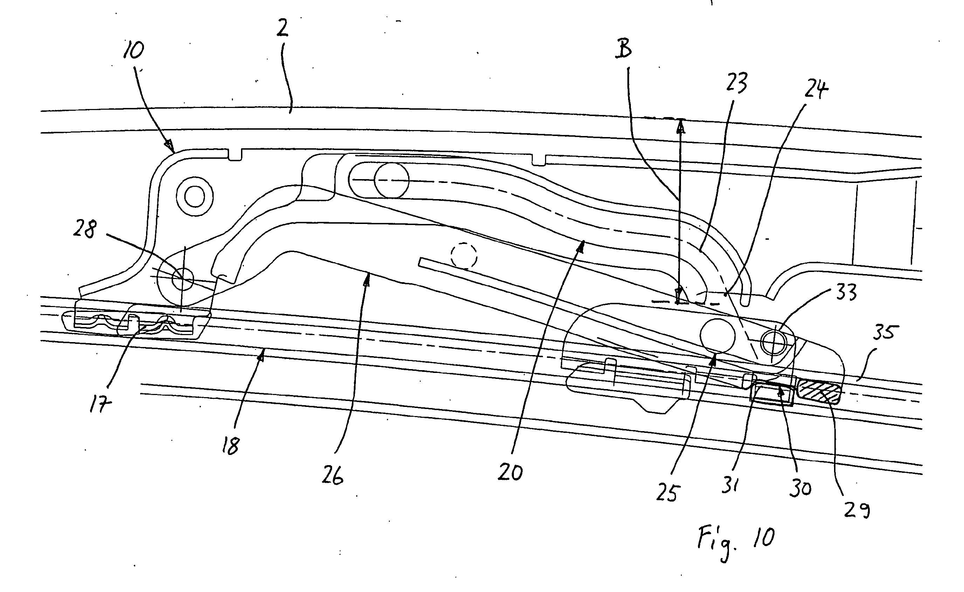

Schließlich zieht der weiter rückwärts bewegte Antriebsschlitten 15 (von der Stellung der Fig. 9 in die Stellung der Fig. 10) über den Koppelhebel 26 das vordere

Kulissenelement 10 nach hinten, das von seinem Gleiter 17 angehoben wird, der im Vorderabschnitt 19 auf das Niveau der eben verlaufenden Führungsbahn 18 ansteigt. Zusätzlich hebt der ausgeschwenkte hintere Ausstellhebel 9 das hintere Kulissenelement 11 an, so dass aufgrund dieser Hubbewegungen die vordere Kulissenbahn 20 an ihrem Endabschnitt 23 relativ zum Steuerbolzen 25 angehoben wird und der Steuerbolzen 25 somit durch die Austrittsöffnung 24 austritt und nun ohne Führungskontakt zu der vorderen Kulissenbahn 20 ist. Die Verstellbewegung wird nun vom Antriebsschlitten 15 ausschließlich über den Koppelhebel auf das vordere Kulissenelement 10 und damit auf den Deckel 2 übertragen, so dass der Steuerbolzen 25 nun funktionslos ist.

Da die Kulissenbahn 20 des vorderen Kulissenelements 10 in ihrem Endabschnitt 23 - im Gegensatz zu bekannten Ausführungen ohne Koppelhebel - nicht mehr die Antriebsbewegung des Antriebsschlittens 15 über den Steuerbolzen 25 übertragen muss, während der Deckel 2 in seine hintere Spoilerstellung verstellt wird (siehe Fig. 5 und 6), kann die Kulissenbahn 20 an ihrem Endabschnitt 23 vertikal auf das dargestellte Maß verkürzt sein, wodurch die maximale Bauhöhe B (siehe Fig. 10) vom Unterrand der Kulissenbahn 20 an ihrer Austrittsöffnung 24 bis zur Oberseite des Deckels 2 wesentlich reduziert werden kann.

Das Schließen des Deckels 2 erfolgt in entgegengesetztem Bewegungsablauf.

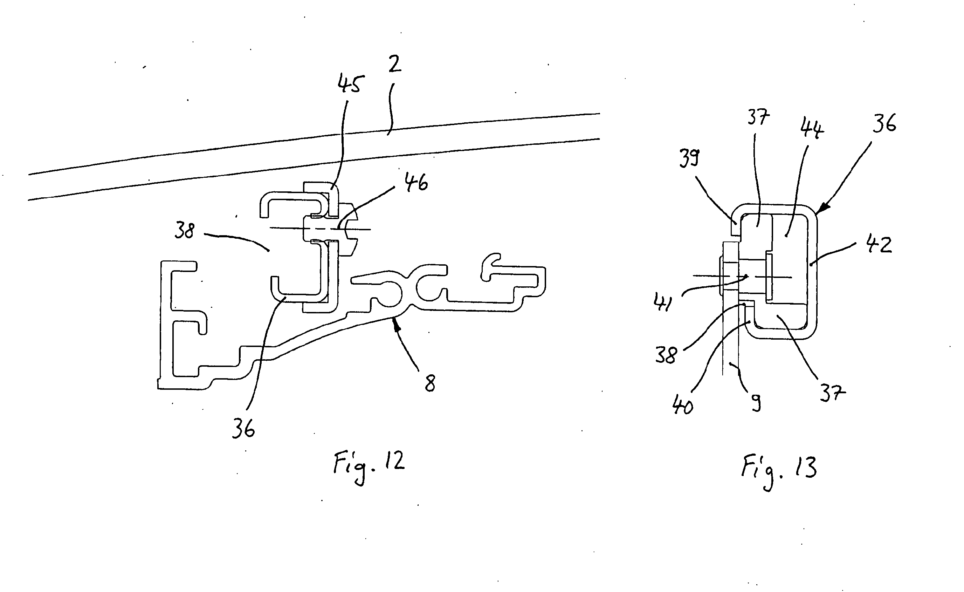

Das hintere Kulissenelement 11 ist oder enthält ein Rollprofil 36, das die Kulissenbahn 12 für einen Gleiter 37 des hinteren Ausstellhebels 9 bildet und insbesondere aus Metall wie z. B. aus Stahl oder aus Aluminium hergestellt ist. Das Rollprofil 36 ist in seiner Längserstreckung an die Länge und Wölbung des Deckels 2 angepasst. Das Rollprofil 36 enthält einen seitlich einseitig offenen Querschnitt (siehe Fig. 13) mit einem Längsschlitz 38 und einer oberen Umbiegung 39 und einer unteren Umbiegung 40 als beidseitige Begrenzungen des Längsschlitzes 38.

Der Gleiter 37 ist an dem Ausstellhebel 9, der auch ein Schlitten oder allgemein ein Steuerteil sein kann, mittels einer Achse 41, die durch den Längsschlitz 38 greift, insbesondere schwenkbar gelagert. Zumindest eine der beiden Umbiegungen 38 und 39 und eine gegenüberliegende Wand 42 des Rollprofils 36 hält den Gleiter 37 in Querrichtung oder Y-Richtung im wesentlichen spielfrei geführt. Ebenso kann der Gleiter 37 im Rollprofil in Z-Richtung spielfrei geführt sein.

Das Rollprofil 36 ist in seinem Oberabschnitt und insbesondere an seiner Wand 42 mittels mehrerer Befestigungselemente, z. B. Schrauben 43, am Deckel 2 oder an einem Deckelträger festlegbar bzw. fest angebracht. Da die Schrauben 43 in den Innenraum des Rollprofils 36 hineinreichen, weist der Gleiter 37 dementsprechend eine Aussparung 44 an derjenigen Stelle auf, so dass er sich in dem Rollprofil 36 bzw. in der Kulissenbahn 12 frei an den Schrauben 43 vorbeibewegen kann.

Die obere Umbiegung 39 ist gegenüber der unteren Umbiegung 38 von der gegenüberliegenden Wand 42 des Rollprofils 36 weiter beabstandet, so dass der Ausstellhebel 9 an der unteren Umbiegung 38 außenseitig vorbeigeführt werden kann und dabei nicht allzu weit über die obere Umbiegung 39 seitlich hervorsteht.

Ein solches Rollprofil 36 kann mit verschiedenen Radien und Krümmungen einfach hergestellt werden und in beliebigen Längen abgelängt werden.

Das vordere Kulissenelement 10 und das hintere Kulissenelement 11 sind miteinander fest verbunden. Durch diesen modularen Aufbau kann das vordere Kulissenelement 10 in einer Ausführung als Standard- oder Gleichteil gebildet sein und für unterschiedliche Deckel und Einsatzfälle ausgelegt sein, wohingegen das hintere Kulissenelement 11 an die jeweilige Dachwölbung und Dach- oder Deckellänge angepasst werden kann.

Das vordere Kulissenelement 10 weist rückseitig einen Verbindungsabschnitt 45 an der Verbindungsstelle mit dem hinteren Kulissenelement 11 auf, der als Umgriffprofil gebildet ist, das das Rollprofil 36 des hinteren Kulissenelements 11 an drei Umfangsseiten, z. B. der Wand 42 und der Oberseite und der Unterseite des Rollprofils 36 (siehe Fig. 12), umgreift und formschlüssig hält. Ein oder mehrere Befestigungselemente wie Schrauben 46 oder Nieten stellen die feste Verbindung sicher. Die Verbindung kann auch durch Toxen, Taumeln oder Schweißen erfolgen oder gesichert sein und der Umgriff kann einfacher gestaltet sein.

Die die beiden Kulissenelemente 10 und 11 sichernden Befestigungselemente 46 können gleichfalls in den Innenraum des Rollprofils 36 reichen. Der Gleiter 37 kann sich bei Bedarf aufgrund seiner Aussparung 44 auch an diesen Befestigungselementen 46 vorbei bewegen.

Die in der Beschreibung und anhand von Ausführungsbeispielen und in den Figuren offenbarten einzelnen Merkmale können in beliebigen technisch zweckmäßigen Anordnungen und Gestaltungen mit dem Erfindungsgegenstand in seiner allgemeinen Form kombiniert werden.

### Bezugszeichenliste

- 1: Fahrzeugdach
- 2: Deckel
- 3: Dachöffnung
- 4: Hinterrand
- 5: Dachhaut
- 6: Vorderbereich
- 7: Antriebsmechanik
- 8: Führungsschiene
- 9: hinterer Ausstellhebel
- 10: vorderes Kulissenelement
- 11: hinteres Kulissenelement
- 12: Kulissenbahn
- 13: Antriebskabel
- 14: Kabelkanal
- 15: Antriebsschlitten
- 16: Vorderende
- 17: Gleiter
- 18: Führungsbahn
- 19: Vorderabschnitt
- 20: Kulissenbahn
- 21: vorderes Ende
- 22: erster Abschnitt
- 23: Endabschnitt

- 24: Austrittsöffnung
- 25: Steuerbolzen
- 26: Koppelhebel
- 27: Vorderende
- 28: Drehachse
- 29: Gleitelement
- 30: Ausnehmung
- 31: Rastabschnitt
- 32: Steg
- 33: Stift
- 34: Auflage
- 35: Führungssteg
- 36: Rollprofil
- 37: Gleiter
- 38: Längsschlitz
- 39: obere Umbiegung
- 40: untere Umbiegung
- 41: Achse
- 42: Wand
- 43: Schraube
- 44: Aussparung
- 45: Verbindungsabschnitt
- 46: Schraube

## Patentansprüche

1. Fahrzeugdach mit einem Deckel (2), der mittels einer Lagereinrichtung zwischen einer Schließstellung in einer Dachöffnung (3), einer Lüftungsstellung, in der er mit seinem Hinterrand (4) hochgeschwenkt ist, und einer Offenstellung, in der er mit hochgeschwenktem Hinterrand (4) an dachseitigen Führungen über einen angrenzenden Dachabschnitt verlagert ist, verstellbar ist,
wobei die Lagereinrichtung ein an der Deckelunterseite angeordnetes Kulissenelement (10) mit einer Kulissenbahn (20) für ein Steuerteil (25) eines Antriebsschlittens (15) aufweist, der an der dachseitigen Führung verfahrbar ist und über die Stellung des Steuerteils (25) relativ zur Kulissenbahn (20) die Stellung des Deckels (2) steuert, und
wobei das Steuerteil (25) im Eingriff an der Kulissenbahn (20) die Verstellung des Deckels (2) für seine Lüftungsstellung steuert und ein Koppelhebel (26) vorgesehen ist, der in seiner Betriebsstellung den Deckel (2) mit dem Antriebsschlitten (15) koppelt und die Verstellung des Deckels (2) für seine Offenstellung steuert,
**dadurch gekennzeichnet,**
**dass** das Steuerteil (25) aus der Kulissenbahn (20) ausgetreten ist, wenn der Deckel (2) in seine Offenstellung nach hinten verschoben wird.

2. Fahrzeugdach nach Anspruch 1,
**dadurch gekennzeichnet, dass** die Kulissenbahn (20) eine reduzierte Bauhöhe in vertikaler Richtung aufweist.

3. Fahrzeugdach nach Anspruch 1 oder 2,
**dadurch gekennzeichnet, dass** in einer Übergangsstellung das Steuerteil (25) noch an der Kulissenbahn (20) geführt gehalten ist und der Koppelhebel (26) im Eingriff an dem Antriebsschlitten (15) ist.

4. Fahrzeugdach nach einem der Ansprüche 1 bis 3,
**dadurch gekennzeichnet, dass** der Koppelhebel (26) an seinem Vorderende (27) um eine Schwenkachse (28) an dem Kulissenelement (10) gelagert ist.

5. Fahrzeugdach nach einem der Ansprüche 1 bis 4,
**dadurch gekennzeichnet, dass** der Koppelhebel (26) vom Antriebsschlitten (15) zwischen seiner Ruhestellung und seiner Funktionsstellung verstellt wird.

6. Fahrzeugdach nach einem der Ansprüche 1 bis 5,
**dadurch gekennzeichnet, dass** der Koppelhebel (26) einen Steg (32) aufweist, der von einem Stift (33) des Antriebsschlittens (15) geführt oder hintergriffen ist.

7. Fahrzeugdach nach einem der Ansprüche 1 bis 6,
**dadurch gekennzeichnet, dass** ein Hinterende des in seine Funktions- oder Koppelstellung verschwenkten Koppelhebels (26) in einem Rasteingriff (30, 31) an dem Antriebsschlitten (15) ist.

8. Fahrzeugdach nach einem der Ansprüche 1 bis 7,
**dadurch gekennzeichnet, dass** der Koppelhebel (26) an seinem Hinterende ein Gleitelement (29) aufweist, das in der Funktions- oder Koppelstellung an einer Führungsbahn (18) geführt ist.

9. Fahrzeugdach nach Anspruch 8,
**dadurch gekennzeichnet, dass** das Gleitelement (29) in der Führungsbahn (18) gegen vertikale Hubbewegung gesichert ist und den Koppelhebel (26) in der Raststellung am Antriebsschlitten (15) hält.

10. Fahrzeugdach nach einem der Ansprüche 1 bis 9,
**dadurch gekennzeichnet, dass** ein hinteres Kulissenelement (11) eines hinteren Ausstellhebels (9) mit dem vorderen Kulissenelement (10) über einen Verbindungsabschnitt (45) verbunden ist.

11. Fahrzeugdach nach Anspruch 10,
**dadurch gekennzeichnet, dass** das hintere Kulissenelement (11) ein Rollprofil (36) ist, das einen Gleiter (37) des Ausstellhebels (9) führend umgreift, und dass das Rollprofil (36) einen Längsschlitz (38) aufweist, durch den eine Achse (41) des Gleiters (37) greift.

12. Fahrzeugdach nach Anspruch 10 oder 11,
**dadurch gekennzeichnet, dass** das Rollprofil (36) angrenzend an den Längsschlitz (38) eine obere Umbiegung (39) und eine untere Umbiegung (40) aufweist, wobei die untere Umbiegung (40) näher an einer gegenüberliegenden Wand (42) des Rollprofils (36) angeordnet ist als die obere Umbiegung (39).

## Claims

1. Vehicle roof with a cover (2) which is adjustable by means of a bearing device between a closed position in a roof opening (3), a ventilation position, in which said cover is pivoted upwards at the rear border (4) thereof, and an open position, in which said cover, with the rear border (4) pivoted upwards, is mounted on guides on the roof via an adjacent roof section,
wherein the bearing device has a slotted guide element (10) which is arranged on the lower side of the cover and has a slotted guide track (20) for a control part (25) of a driving carriage (15) which is movable on the guide on the roof and controls the position of the cover (2) via the position of the control part (25) relative to the slotted guide track (20), and
wherein the control part (25) in engagement on the slotted guide track (20) controls the adjustment of the cover (2) for the ventilation position thereof, and a coupling lever (26) is provided, said coupling lever, in the operating position thereof, coupling the cover (2) to the driving carriage (15) and controlling the adjustment of the cover (2) for the open position thereof,
**characterized in that** the control part (25) emerges from the slotted guide track (20) when the cover (2) is displaced rearwards into the open position thereof.

2. Vehicle roof according to Claim 1, **characterized in that** the slotted guide track (20) has a reduced overall height in the vertical direction.

3. Vehicle roof according to Claim 1 or 2, **characterized in that**, in a transition position, the control part (25) is still guided on the slotted guide track (20) and the coupling lever (26) is in engagement on the driving carriage (15).

4. Vehicle roof according to one of Claims 1 to 3, **characterized in that** the front end (27) of the coupling lever (26) is mounted about a pivot axis (28) on the slotted guide element (10).

5. Vehicle roof according to one of Claims 1 to 4, **characterized in that** the coupling lever (26) is adjusted between the inoperative position thereof and the functional position thereof by the driving carriage (15).

6. Vehicle roof according to one of Claims 1 to 5, **characterized in that** the coupling lever (26) has a web (32) which is guided or is engaged behind by a pin (33) of the driving carriage (15).

7. Vehicle roof according to one of Claims 1 to 6, **characterized in that** a rear end of the coupling lever (26) pivoted into the functional or coupling position thereof is in a latching engagement means (30, 31) on the driving carriage (15).

8. Vehicle roof according to one of Claims 1 to 7, **characterized in that** the rear end of the coupling lever (26) has a sliding element (29) which, in the functional or coupling position, is guided on a guide track (18).

9. Vehicle roof according to Claim 8, **characterized in that** the sliding element (29) is secured in the guide track (18) against a vertical lifting movement and keeps the coupling lever (26) in the latching position on the driving carriage (15).

10. Vehicle roof according to one of Claims 1 to 9, **characterized in that** a rear slotted guide element (11) of a rear deployment lever (9) is connected to the front slotted guide element (10) via a connecting section (45).

11. Vehicle roof according to Claim 10, **characterized in that** the rear slotted guide element (11) is a rolled profile (36) which engages around a slider (37) of the deployment lever (9) in a guiding manner, and **in that** the rolled profile (36) has a longitudinal slot (38) through which an axis (41) of the slider (37) reaches.

12. Vehicle roof according to Claim 10 or 11, **characterized in that** the rolled profile (36) has an upper bent-over portion (39) and a lower bent-over portion (40) adjacent to the longitudinal slot (38), the lower bent-over portion (40) being arranged closer to an opposite wall (42) of the rolled profile (36) than the upper bent-over portion (39).

## Revendications

1. Toit de véhicule comprenant un capot (2) qui peut être réglé au moyen d'un dispositif de palier entre une position de fermeture dans une ouverture de toit (3), une position de ventilation, dans laquelle il est pivoté vers le haut par son bord arrière (4), et une position d'ouverture, dans laquelle il est décalé avec son bord arrière pivoté vers le haut (4) sur des guides latéraux de toit par-dessus une portion de toit adjacente,
le dispositif de palier présentant un élément de coulisse (10) disposé sur le côté inférieur du capot, avec une piste de coulisse (20) pour une pièce de commande (25) d'un chariot d'entraînement (15), qui peut être déplacé sur le guide du côté toit et qui commande, par le biais de la position de la pièce de commande (25) par rapport à la piste de coulisse (20), la position du capot (2), et
la pièce de commande (25) en prise avec la piste de coulisse (20) commandant le réglage du capot (2) pour sa position de ventilation, et un levier d'accouplement (26) étant prévu, lequel, dans sa position fonctionnelle, accouple le capot (2) au chariot d'entraînement (15) et commande le réglage du capot (2) pour sa position d'ouverture, **caractérisé en ce que**
la pièce de commande (25) est sortie de la piste de coulisse (20) quand le capot (2) est déplacé vers l'arrière dans sa position d'ouverture.

2. Toit de véhicule selon la revendication 1, **caractérisé en ce que** la piste de coulisse (20) présente une hauteur de construction réduite dans la direction verticale.

3. Toit de véhicule selon la revendication 1 ou 2, **caractérisé en ce que** dans une position de transition, la pièce de commande (25) est encore maintenue de manière guidée sur la piste de coulisse (20) et le levier d'accouplement (26) est en prise sur le chariot d'entraînement (15).

4. Toit de véhicule selon l'une quelconque des revendications 1 à 3,
**caractérisé en ce que** le levier d'accouplement (26) est monté à son extrémité avant (27) autour d'un axe de pivotement (28) sur l'élément de coulisse (10).

5. Toit de véhicule selon l'une quelconque des revendications 1 à 4,
**caractérisé en ce que** le levier d'accouplement (26) est déplacé par le chariot d'entraînement (15) entre sa position de repos et sa position fonctionnelle.

6. Toit de véhicule selon l'une quelconque des revendications 1 à 5,
**caractérisé en ce que** le levier d'accouplement (26) présente une nervure (32) qui est guidée ou saisie par l'arrière par une goupille (33) du chariot d'entraînement (15).

7. Toit de véhicule selon l'une quelconque des revendications 1 à 6,
**caractérisé en ce qu'**une extrémité arrière du levier d'accouplement (16) pivoté dans sa position fonctionnelle ou sa position d'accouplement est en engagement par encliquetage (30, 31) sur le chariot d'entraînement (15).

8. Toit de véhicule selon l'une quelconque des revendications 1 à 7,
**caractérisé en ce que** le levier d'accouplement (26) présente sur son extrémité arrière un élément de glissement (29) qui est guidé dans sa position fonctionnelle ou d'accouplement sur une piste de guidage (18).

9. Toit de véhicule selon la revendication 8,
**caractérisé en ce que** l'élément de glissement (29) est fixé dans la piste de guidage (18) contre tout mouvement de levage vertical, et retient le levier d'accouplement (26) dans la position d'encliquetage sur le chariot d'entraînement (15).

10. Toit de véhicule selon l'une quelconque des revendications 1 à 9,
**caractérisé en ce qu'**un élément de coulisse arrière (11) d'un levier de sortie arrière (9) est connecté à l'élément de coulisse avant (10) par le biais d'une portion de connexion (45).

11. Toit de véhicule selon la revendication 10,
**caractérisé en ce que** l'élément de coulisse arrière (11) est un profilé laminé (36), qui vient en prise en le guidant autour d'un coulisseau (37) du levier de sortie (9), et **en ce que** le profilé laminé (36) présente une fente longitudinale (38) à travers laquelle vient en prise un axe (41) du coulisseau (37).

12. Toit de véhicule selon la revendication 10 ou 11, **caractérisé en ce que** le profilé laminé (36) présente, à côté de la fente longitudinale (38), un cintrage supérieur (39) et un cintrage inférieur (40), le cintrage inférieur (40) étant disposé plus près d'une paroi opposée (42) du profilé laminé (36) que le cintrage supérieur (39).
